# EUROPEAN PATENT SPECIFICATION

(11) **EP 3 738 674 B1**
(45) Date of publication and mention of the grant of the patent: **28.08.2024**
(21) Application number: 20175027.0
(22) Date of filing: 15.05.2020
(51) Int. Cl.: B03D 1/14, C02F 1/24, C02F 1/44, C02F 101/36, C02F 103/06

(54) **SYSTEM AND METHODS FOR WATER PROCESSING**
SYSTEM UND VERFAHREN ZUR WASSERVERARBEITUNG
SYSTÈME ET PROCÉDÉ DE TRAITEMENT DE L'EAU

(30) Priority: 17.05.2019 SE 1950589
(43) Date of publication of application: 18.11.2020
(73) Proprietor: Björks Rostfria Aktiebolag, 763 21 Hallstavik (SE)
(72) Inventor: BJÖRK, Per Olof, 742 50 Hargshamn (SE); MÅRTENSSON, Jonas, 742 50 Hargshamn (SE)
(74) Representative: Zacco Sweden AB

(56) References cited:
- CN-A- 101 070 204
- US-A- 2 142 207
- US-A1- 2008 047 903
- US-A1- 2010 126 931
- ROSS IAN ET AL: "A review of emerging technologies for remediation of PFASs", REMEDIATION, vol. 28, no. 2, 1 March 2018 (2018-03-01), US, pages 101 - 126, XP055839946, ISSN: 1051-5658, Retrieved from the Internet <URL:https://api.wiley.com/onlinelibrary/tdm/v1/articles/10.1002%2Frem.21553> DOI: 10.1002/rem.21553

## Description

### TECHNICAL FIELD

The present invention relates to a system for water processing comprising an apparatus for separating perfluoroalkyl and polyfluoroalkyl substances from water and methods for separating perfluoroalkyl and polyfluoroalkyl substances from water.

### BACKGROUND AND PRIOR ART

Perfluoroalkyl and polyfluoroalkyl substances, abbreviated PFAS, is a group of man-made chemical compounds present in the environment as pollutants and receiving increased attention. Compounds in the PFAS group have been produced since the 1950s and find use in diverse industrial applications such as water repellents. A major source of PFAS in the environment is their use in surface tension lowering agents in foams used in firefighting, in particular its use in combating fires involving hydrocarbon-based fuels, including training of firefighters.

Currently, eleven defined compounds ("PFAS-11") are frequently analysed in water for human consumption, but this number of substances may change in the future. Perfluorooctanesulfonic acids (PFOS) constitute a large part of the PFAS. PFAS are considered to be hazardous, even at low levels. Current recommendations in Sweden are that actions need to be taken if environmental water shows concentrations >90 ng/L of PFAS-11, and that PFAS-11 content shall be kept as far below 90 ng/L as possible. Water containing hundreds of nanograms or micrograms of perfluoroalkyl and polyfluoroalkyl substances (PFAS) per litre therefore needs to be purified, in large volumes.

Perfluorooctane sulfonate (PFOS) is carcinogenic and its use is currently heavily restricted. However, this substance has previously been used, for example in fire-extinguishers. This has resulted in relatively high concentrations of PFOS in the groundwater at some locations, in particular locations where large amounts of fire-extinguishing foams have been used. Such locations include airports and training grounds for civilian and military fire-fighters. PFOS and perfluorooctanoic acid (PFOA) are highly mobile once introduced to the aquatic environment and are not removed by conventional wastewater treatment. There are currently no reasonable *in situ* or *ex situ* remediation techniques available that can deal with PFAS cleanup on the scale required for aquifers or watersheds. (Banzhaf, Filipovic, Lewis, Sparrenbom, & Barthel, 2017).

There is a wide variety of technologies used by waste facilities to treat water containing PFAS, including any or a combination of the following: (a) absorption by passage through activated carbon media, most commonly in the form of granular activated carbon (GAC); (b) absorption by passage through a clay based media; (c) filtration by reverse osmosis (RO) membranes, and (d) absorption by passage through ion exchange resin. In general, the treatment agents used in these technologies cannot be easily regenerated and require disposal (typically to landfill) or destruction after they have reached maximum capacity.

Membrane technology for water treatment comprise a number of well-known and commercially available technologies, including microfiltration, ultrafiltration, nanofiltration, and reverse osmosis membranes (Alzahrani & Mohammad, 2014) WO2017/210752 disclose an in situ method for separation of PFAS from groundwater, and a corresponding apparatus. The apparatus, consisting of an elongate cylinder of relatively small volume, is inserted into a well in the ground and treats groundwater *in situ* by introducing gas in the lower part of the apparatus to create an upward flow of groundwater and a PFAS-containing foam that are both removed from the top of the apparatus.

Chinese patent application CN 101 070 204 A discloses a method and a system for reducing content of perfluoralkyl and polyfluoralkyl substances (PFAS) in PFAS-contaminated water, said system comprising a reservoir for accommodating PFAS-contaminated water and a gas injection device to create a PFAS-containing foam.

Said system also comprises a membrane filtration device.

Ross Ian ET AL. discusses the common general knowledge regarding remediation technologies for PFAS-contaminated water.

### SUMMARY OF THE INVENTION

Despite known solutions in the field, it would be desirable to develop systems and methods, that alleviates or at least reduces drawbacks with prior art. The apparatus disclosed in WO2017/210752, has several drawbacks. The treated groundwater exits the apparatus at the top of the apparatus which necessitates measures to regulate the foam depth in order to not re-contaminate the treated groundwater with the PFAS-containing foam. The flow rate of the groundwater is governed by the geological properties of the surrounding well, and therefore cannot be easily manipulated by a user of the apparatus. The chemical composition of the groundwater, which influences the foam forming process, also cannot be manipulated by a user. Also, a large number of wells needs to be prepared and a corresponding number of devices introduced more or less permanently into the ground in order to treat large volumes of water in a short time.

Production of water of quality for human consumption may comprise various purification techniques, such as membrane filtration, active carbon filtration and oxidation. Oxidation of PFAS and particularly PFOS however produces other types of low molecular weight perfluorinated compounds. Filtration through active carbon is efficient, but requires exchanges or regeneration of the carbon filter, which is expensive. Membrane filtration is also efficient, but provides large volumes of PFOS-enriched concentrate that must be sent to destruction. Large volumes of concentrate requires expensive transport and destruction processes. With the apparatus and method according to the present invention, a further enrichment of PFAS is achieved. The volume of PFAS-containing water that must be sent to destruction is thereby significantly reduced. This way, transport volumes and/or transport intervals as well as the destruction costs are reduced.

An object of the present invention is thus to provide a new and advantageous system and corresponding method that can be used in reducing PFAS content in PFAS-contaminated water on a scale that is useful for decontamination of large volumes of contaminated water, such as tens or hundreds cubic metres of contaminated water per day, while at the same time producing a significantly smaller (as compared to the prior art) amount of PFAS-enriched material that needs to be subjected to destruction processes.

Hence, according to an aspect of the present invention a method as described in claim 1 for reducing content of perfluoroalkyl and polyfluoroalkyl substances (PFAS) in PFAS-contaminated water collected from the environment is provided. The method makes use of an apparatus comprising
a reservoir for accommodating PFAS-contaminated water, the reservoir having a longitudinal extension between a top end and a bottom end;
at least one gas injection device arranged at least partly inside the reservoir to inject gas into the water and thereby create a foam containing PFAS at the water surface; and
a collection container arranged in fluid communication with the top end of the reservoir to collect the foam;
wherein the reservoir comprises a water inlet for supply of PFAS-contaminated water, and a water outlet arranged at the bottom end for discharging water with reduced PFAS content.

According to another aspect of the invention, a system for purifying water is provided. The system comprises a water purification device configured to generate a first water stream having a reduced content of PFAS and a second water stream having an increased content of PFAS. The system further comprises an apparatus as disclosed herein arranged to receive said second water stream. The system is further defined in claim 6.

The method according to the invention for reducing content of perfluoroalkyl and polyfluoroalkyl substances (PFAS) in PFAS-contaminated water from the environment, comprising the steps
50) Subjecting PFAS-contaminated water collected from the environment to a purification step to obtain a first water stream having a reduced content of PFAS and a second water stream having an increased content of PFAS;
S1) Feeding the water stream having an increased content of PFAS into an apparatus as disclosed herein to achieve a water level above the gas injection device(s);
S2) Injecting gas through said gas injection device to thereby create a foam containing PFAS at the water surface and allowing said foam to exit the reservoir to the collection container;
S3) Collecting the PFAS-containing foam in a collection container;
S4) removing water with reduced PFAS-content from the reservoir through the water outlet;
S5) Combining the first water stream and the water obtained in step S4); and U
S6) Releasing the combined water streams obtained in step S5) to the environment.

The present disclosure further describes a computer program comprising instructions which, when the program is executed by a control device being a computer comprised in an apparatus or system according to the invention, cause the computer to carry out the method according to the invention.

The present disclosure further describes a computer-readable medium comprising instructions which, when executed by a control device being a computer comprised in an apparatus or system according to the invention, cause the computer to carry out the method according to the invention.

Whereas the invention is described below, it should be noted that it is not restricted to the specific details described. Specialists having access to the teachings herein will recognise further applications, modifications and incorporations within other fields, which are within the scope of the invention which is as defined in the appended claims.

### BRIEF DESCRIPTION OF THE DRAWINGS

For fuller understanding of the present invention and further objects and advantages of it, the detailed description set out below should be read together with the accompanying drawings, in which the same reference notations denote similar items in the various drawings, and in which:
- Figure 1: schematically illustrates an apparatus according to an example;
- Figure 2: schematically illustrates an apparatus according to an example;
- Figure 3a-c: schematically illustrate details of an apparatus according to two examples;
- Figure 4: schematically illustrates a system according to an example; and
- Figure 5a-b: illustrates flowcharts of a method according to an example.

### DEFINITIONS

The term "perfluoroalkyl and polyfluoroalkyl substances", also known as "perfluorinated and polyfluorinated alkylated substances", is abbreviated PFAS herein. PFAS is a group comprising more than 3,000 specific compounds and includes the following eleven compounds ("PFAS-11"): Perfluorobutanesulfonic acid (PFBS), Perfluorhexanesulfonic acid (PFHxS), Perfluoroctanesulfonic acid (PFOS), Fluorotelomer sulfonate (6:2 FTS), Perfluorbutanoic acid (PFBA), Perfluorpentanoic acid (PFPeA), Perfluorhexanoic acid (PFHxA), Perfluorheptanoic acid (PFHpA), Perfluoroktanoic acid (PFOA), Perfluornonanoic (PFNA), Perfluordekanoic acid (PFDA).

### DETAILED DESCRIPTION OF THE INVENTION

Disclosed herein is an apparatus for separating perfluoroalkyl and polyfluoroalkyl substances from water is provided. The apparatus comprises
a reservoir for accommodating PFAS-contaminated water, the reservoir having a longitudinal extension between a top end and a bottom end;
at least one gas injection device arranged at least partly inside the reservoir to inject gas into the water and thereby create a foam containing PFAS at the water surface; and
a collection container arranged in fluid communication with the top end of the reservoir to collect the foam;
wherein the reservoir comprises a water inlet for supply of PFAS-contaminated water, and a water outlet arranged at the bottom end for discharging water with reduced PFAS content.

The apparatus may specifically be configured for separating a specific PFAS compound, such as one or more of the compounds included in PFAS-11, in particular PFOS, from water.

By means of the apparatus as disclosed herein, the injected gas will create bubbles in the water, which bubbles will rise through the water to the surface. PFAS, and other lighter than water compounds in the PFAS-contaminated water, will also rise to the surface and form a layer with increased concentration of PFAS. As the bubbles passes through this layer, the PFAS forms a foam that rises above the water surface. The foam will thereby comprise highly concentrated aqueous PFAS. The water inside the reservoir will, as result of the created foam, comprise a reduced amount of PFAS and will be discharged via the water outlet at the bottom end of the reservoir. The foam is preferably caused or allowed to collapse in the collection container, leaving a relatively small volume of water containing high amounts of PFAS.

The apparatus may be stationary or it may be movable. The apparatus may be configured for personal use or for use within the water purification industry. The apparatus may for example be used in water treatment plants or it may be used for treating leacheate from soil cleaning or decontamination.

The reservoir may comprise a top wall, a bottom wall and side walls. The longitudinal extension of the reservoir may thus be between the top wall and the bottom wall. The longitudinal extension of the reservoir defines the height of the reservoir. In one example, the reservoir has a cylindrical shape but it is to be understood that the reservoir may have any shape. The reservoir encloses a volume for accommodating PFAS-contaminated water. The volume of the reservoir may be 0.1-5 m³. Depending on the application in which the apparatus is used, the volume, and thus the size, of the reservoir may vary. For water purification for personal use, the reservoir may have a volume of 0.1-1 m³ and for use in water treatment plants the reservoir may have a volume of 1-5 m³, or even larger. The reservoir may be made of steel, particularly stainless steel, or the reservoir may be made of plastic. The material used for the reservoir may depend on the hardness of the water to be purified. If the apparatus is to be used on hard water, the reservoir may comprise a material with hard and smooth inner surface, so that chalk and other deposits are prevented or impeded from building up inside the reservoir.

The water inlet may be arranged in a side wall of the reservoir. The water inlet may be arranged in a side wall adjacent the top wall of the reservoir. This way, the supplied water entering the reservoir via the water inlet will sink to the bottom end of the reservoir. When the apparatus is operated with continuous feeding of water into and out of the apparatus, this will create a continuous downward flow of water within the reservoir. PFAS/PFOS and any hydrocarbons or other organic pollutants present in the feed water that are lighter than water, will rise towards the water surface.

The PFAS-containing foam is collected in the collection container. The collection container may be connected to the top end of the reservoir via a foam outlet and a collection pipe. In one example, the collection container has a cylindrical shape but it is to be understood that the collection container may have any shape. The collection container may have a height, which is similar to the height of the reservoir. This way, the collection pipe can be relatively short and the risk for evaporation of the foam in the collection pipe is reduced. The collection container may comprise a vent port. The collection container may further comprise a filter arranged at the vent port to reduce escape of PFAS from the apparatus. Inside the collection container the foam may return to liquid form (i.e collapse) and the collection container may thereby comprise water with a high concentration of PFAS. In a one example, the PFAS-concentrate is removed and subjected to destruction. In one example, the water inside the collection container is evaporated, so that the PFAS is solidified. The solidified PFAS can then be removed and subjected to destruction.

According to an example, the apparatus further comprises a tube connected to the water outlet, the tube being arranged on the outside of the reservoir and extending in parallel with the longitudinal extension of the reservoir; and a weir device connected to the tube to regulate the water level inside the reservoir. By weir it is meant a dam arranged to control the height of a body of water by flow of water over the top of the dam. The main extension of the tube may be parallel with the longitudinal extension of the reservoir. Thus, the tube may extend from the bottom end of the reservoir and upwards, towards the top end of the reservoir. A first end of the tube may be connected to the water outlet, and a second end of the tube may be connected to the weir device. As water is supplied into the reservoir, the tube will also be filled with water. The configuration and arrangement of the tube means that the water level in the tube is similar to the water level in the reservoir. The second end of the tube, and thus the weir device, may be arranged at a height corresponding to the top end of the reservoir. Typically, the weir device is arranged so that the resulting water level inside the reservoir is at a distance from the top wall of the reservoir. This way, a space is formed between the water surface and the top wall. The weir device may thus be arranged, so that the water level results in a desired space for the created foam. By regulating the water level, there will be more or less space for the foam inside the reservoir.

The weir device may comprise a weir container arranged in fluid communication with the tube, and a weir plate arranged inside the weir container. The weir plate may be movably arranged or fixed. The weir plate may be arranged to divide the weir container into a first chamber and a second chamber. The first chamber may be fluidly connected to the tube and may thus be attached to the second end of the tube. The second chamber may comprise an outlet for discharging the water. It is to be understood that the water discharged from the second chamber may be conveyed for further treatment, collected, or provided to a recipient.

Water discharged from the reservoir via the water outlet will thus flow into the first chamber and when the water level in the first chamber rises above the weir plate, the water will flow into the second chamber and be discharged. The weir device or weir plate may be configured to be movable in vertical direction. By changing the vertical position of the weir device or weir plate, the water level in the first chamber can vary, and the water level in the reservoir can thereby vary as well. Thus, the vertical position of the weir device or weir plate determines the water level in the reservoir.

The apparatus may comprise any number of gas injection devices. In one example, the apparatus comprises three gas injection devices. For the sake of clarity, the at least one gas injection device of the apparatus will herein be referred to as the gas injection device. Thus, in the event that the apparatus comprises a plurality of gas injection devices, the features disclosed in relation to the gas injection device will be applicable on all gas injection devices of the apparatus.

The gas injection device is arranged below the intended surface level of water when the apparatus is in use. The gas injection device may be arranged at the bottom end of the reservoir. In one example, the gas injection device is arranged in the bottom wall of the reservoir. The gas injection device may comprise an attachment part and an injection part. The attachment part may thus be configured to be attached to the reservoir. The injection part may comprise multiple openings for injecting gas into the reservoir.

In one example, the gas injection device extends radially inside the reservoir. The injection part of the gas injection device may comprise an elongated hollow body with a plurality of openings. The elongated hollow body may be a tube with a closed end and a plurality of openings in the circumferential wall. Gas supplied into the hollow space of the tube may thereby be injected via the openings into the water. Thus, in this example, the gas injection device may be attached to a side wall of the reservoir and extend radially towards the centre of the reservoir. The gas injector device may extend from one side wall to another. Alternatively, the gas injector device may extend essentially to the centre of the reservoir.

In one example, the gas injection device is arranged at a distance, in the longitudinal extension, from the bottom wall of the reservoir. This way, there will be room for deposits below the gas injection device and the risk for deposits clogging the gas injection device is reduced. The distance between the gas injection device and the bottom wall of the reservoir may correspond to 25-50% of the height of the reservoir. Typically, the gas injection device is arranged closer to the bottom wall than the top wall of the reservoir. The water outlet may be arranged below the at least one gas injection device. The gas injection device may further be configured to inject gas in multiple directions inside the reservoir. In the event that the gas injection device is configured as an elongated tube, the gas injection device may comprise openings arranged symmetrically around the circumference of the tube.

The at least one gas injection device may be inserted through an aperture in the reservoir and be removably attached to the outside of the reservoir. Thus, the reservoir may comprise an aperture for insertion of the gas injection device. This way, the gas injection device can be mounted/dismounted from the outside of the reservoir and service, cleaning and replacement of the gas injection device is thereby facilitated. The aperture may be arranged on a side wall of the reservoir. Thus, the gas injection device may be inserted through the aperture and be attached to the outside of the side wall. Typically, the attachment part of the gas injection device may be attached to the outside of the side wall. In one example, the injection part of the gas injection device comprises an elongated hollow body and the attachment part may comprise a flange portion, configured to abut the outside of the reservoir. The flange portion may have a larger diameter than the elongated hollow body. The flange portion may further have a larger diameter than the aperture in the reservoir. This way, there is no risk that the gas injection device falls into the reservoir when being mounted.

The gas to be injected can be air or any other suitable gas, such as nitrogen or oxygen or any mixture thereof.

The reservoir may comprise a closable opening at the top end. The opening may be referred to as a top opening. The top opening may be arranged in the top wall of the reservoir. The top opening may be used for inspection and thus allow monitoring of the foam creation. The top opening may be closed by a lid. The lid may be threaded on the inside and may thus be configured to be screwed on the reservoir to close the top opening. The reservoir may further comprise a closable opening at the bottom end of the reservoir. This opening may be referred to as a bottom opening. The bottom opening may be arranged in a side wall of the reservoir. The bottom opening may be used for removal of deposits and cleaning of the reservoir. The bottom opening may be closed by a cover. The cover may be removable attached to the reservoir by means of fasteners, such as screws or bolts or similar.

According to another example, the apparatus further comprises an gas supplying unit connected to the at least one gas injection device, the gas supplying unit being configured to provide a gas pressure within the range of 0,2-0,4 bar. The gas supplying unit may be arranged in fluid communication with the gas injection device, so that the gas provided by the gas supplying unit can be injected into the reservoir via the gas injection device. Depending on the volume of water inside the reservoir and the configuration of the gas injection device, a different gas pressure will be required to achieve a foam. The configuration of the gas injection device will determine the pressure loss in the gas injection device. The pressure loss in combination with the water volume will determine which gas pressure is required from the gas supplying unit to achieve a foam. Suitably, the gas supplying unit is controllable so that the provided gas pressure can be regulated. The gas supplying unit may comprise a fan. Typically, the apparatus according to the present invention does not require any gas compressors to create the foam, which reduces costs and energy needs.

The apparatus may further comprise a control device configured to control the water flow supplied via the water inlet and/or the gas flow injected by means of the at least one gas injection device. The control device may be configured to control the gas supplying unit and thereby control the gas flow injected by means of the gas injection device. Particularly, the control device may be configured to control the gas pressure provided by the gas supplying unit, including turning the gas supply on and off. The apparatus may comprise a valve arrangement arranged at the water inlet, whereby the control device may be configured to control the valve arrangement. This way, the control device can control the water flow through the water inlet. Alternatively, the apparatus is connected to a water supply unit, which determines the water flow into the reservoir. The control device may be configured to control the gas flow injected by means of the at least one gas injection, based on the water flow into the reservoir. The control device may be configured to perform the herein disclosed method. It is to be understood that the control device may be implemented as a separate entity or distributed in two or more physical entities. The control device may comprise one or more control units and/or computers. The control device may thus be implemented or realised by the control device comprising a processor and a memory, the memory comprising instructions, which when executed by the processor causes the control device to perform the herein disclosed method.

According to one aspect, the invention relates to a method as defined in claim 1.

In one embodiment, wherein the apparatus comprises a tube connected to the water outlet, the tube being arranged on the outside of the reservoir and extending in parallel with the longitudinal extension of the reservoir; and a weir device connected to the tube to regulate the water level inside the reservoir, water with reduced PFAS-content is continuously removed from the reservoir through said tube. In one embodiment, PFAS-contaminated water is continuously fed into the reservoir. Use of the above described weir device facilitates a steady and continuous flow of water through the apparatus without need for actuation of valves to regulate the flow out of the apparatus.

In one embodiment, the PFAS-contaminated water is fed into the reservoir at a flow rate adapted to achieve a retention time for water in the reservoir of 2-4 hours. This has been found to be a suitable retention time to allow PFAS to rise to the upper part of the water body retained in the reservoir so as to be available for foam-forming at the surface. When water is continuously fed into the reservoir, the flow rate in and out of the reservoir are essentially equal so as to keep a fixed volume of water in the reservoir. The retention time for water in the reservoir is governed by the flow rate in and out of the reservoir, and the volume of water kept in the reservoir. The present invention is suitable for large-scale processing of water and the volume of water kept in the reservoir may thus be 1 m³ or more, such as 2, 3, 4, or 5 m³ or even larger. The flow rate into the reservoir may correspondingly be in the range 0.25-2.5 m³ per hour or even higher. If high flow rates are desired, a number of apparatus may also be operated in parallel.

The forming of a foam through injection of gas will be influenced by the presence of various compounds in the PFAS-contaminated water, not only the concentration of PFAS. Higher concentrations of PFAS, such as PFOS, sometimes in combination with other pollutants, increase the volume of produced foam. In one embodiment, the PFAS-content in the PFAS-contaminated water is >500 ng/L. In one embodiment, the PFOS-content in the PFAS-contaminated water is >500 ng/L.

It has been found that the concentration of PFAS in the liquid phase of the collected foam can be as high as >6.5 mg/L, i.e. 6.5*10⁶ ng/L. This was obtained with a PFAS-content in the feed water of 1*10³ ng/L. Thus, in certain embodiments, the PFAS-content in the collected foam is >1.5 mg/L, such as >2 mg/L, >3 mg/L>4 mg/L, >5 mg/L, >6 mg/L, or >6.5 mg/L.

In one embodiment, the injection of gas is performed for a first period of time followed by a second period of time when no gas is injected. The provision of a "quiet period" when no gas is injected allows PFAS and other compounds and material lighter than water to rise to the upper part of the body of water to provide a slightly enhanced concentration at the surface. PFAS and other pollutants are then available at a higher concentration at the surface when gas is again injected into the water, with increased foam formation as a result. In one embodiment, first and/or second period(s) of time are from about 15 minutes to about 45 minutes, such as about 30 minutes or 0.5 hours.

The method of the invention is adapted to processing groundwater, or water from other sources, collected from the environment in large quantities and where the content of PFAS is not high enough to create a reasonable amount of PFAS-enriched foam. Removal of PFAS from water using e.g. membrane filtration or reverse osmosis is well-known in the art. Such methods produce a permeate essentially free of PFAS and a concentrate enriched in PFAS. While the concentrate has a significantly higher PFAS-content than the original water, it still has a concentration of only about 500-1,500 ng/L, depending on the concentration in the original water.

It has previously been the practice to collect the concentrate obtained from membrane filtration and subject the entire volume of concentrate (about 10-25% of the initial water volume) to destruction or treatment with active carbon filters. While this produces a very pure water (the permeate, which is about 75-90% of the initial water volume) that can be returned to the environment or provided for human consumption, it also entails a significant cost in arranging for destruction of very large volumes of concentrate. As destruction facilities are highly specialized facilities, it is often required to transport these large quantities of contaminated water large distances, adding an environmental cost to the economic cost.

According to the present invention, the concentrate is further processed using the method described above. The volume of contaminated water can thereby be reduced by a factor of about 10³-10⁴, i.e. rather than transporting 10 m³ of contaminated water to a destruction facility, it is only necessary to transport 1-10 litres.

The water obtained from the treated concentrate is then combined with the permeate obtained from the initial membrane filtration to obtain a water that is not as pure from PFAS as the initial permeate, but still has a PFAS content that is acceptable when returning the water to the environment.

The methods according to the invention are useful in reducing content of PFAS in PFAS-contaminated water also when the PFAS-contaminated water contains additional pollutants such as hydrocarbons. This may be the case when the water to be processed is obtained from a site where PFAS or PFOS containing foam has been used to extinguish fires involving fuel, in particular aviation fuel. Such sites include, without prejudice, airports and training sites for firefighters. Without being bound by any particular theory, it may be that the presence of hydrocarbons enhance the foam-forming properties of PFAS-contaminated water. Thus, in one embodiment of the methods according to the invention, the PFAS-contaminated water further contains hydrocarbons comprising 5 to 16 carbon atoms, such as 8-12 carbon atoms, in particular 8 carbon atoms.

According to an aspect of the present invention, a system for reducing content of perfluoroalkyl and polyfluoroalkyl substances (PFAS) in PFAS-contaminated water is provided, as defined in claim 6.

The system comprises a water purification device configured to generate a first water stream having a reduced content of PFAS and a second water stream having an increased content of PFAS, and an apparatus as disclosed herein, arranged to receive said second water stream.

The water purification device may be a filtration device. The filtration device may be configured to filtrate water containing PFAS and will generate purified water and a concentrate containing PFAS. The filtration device may be configured to remove particles, suspended material and high levels of iron and manganese from the water, as well as PFAS. The concentrate may subsequently be lead to the apparatus for further enrichment. The filtration device may be a membrane filtration device, such as an ultrafiltration, reverse osmosis or nanofiltration device.

In certain embodiments of the invention, the specific PFAS to be reduced in PFAS-contaminated water is perfluoroctanesulfonic acid (PFOS). In certain embodiments of the invention, the PFAS-contaminated water does not contain 6:2 FTS.

The invention will now be further described in relation to the appended drawings.

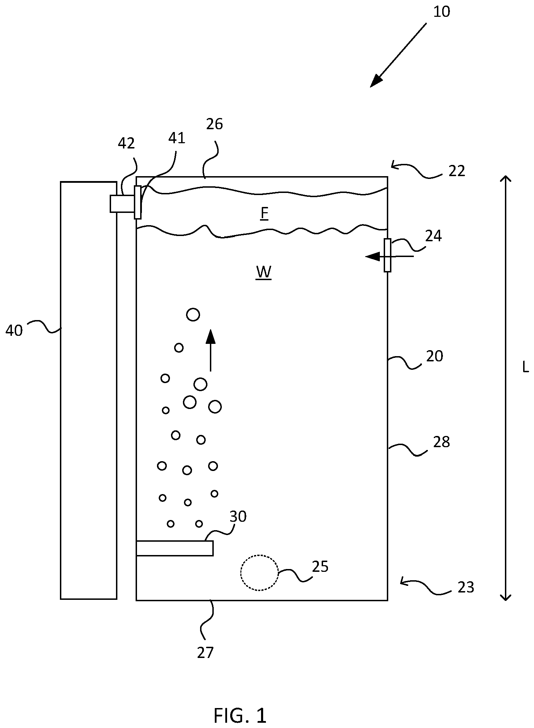

Figure 1 schematically illustrates an apparatus 10 according to an example. The apparatus 10 is configured for separating perfluoroalkyl and polyfluoroalkyl substances from water. Specifically, the apparatus 10 may be configured for separating a specific PFAS compound, such as one or more of the compounds included in PFAS-11, in particular PFOS, from water. The apparatus 10 comprises a reservoir 20 for accommodating PFAS-contaminated water W. The reservoir 20 has a longitudinal extension L between a top end 22 and a bottom end 23. The apparatus 10 further comprises at least one gas injection device 30 arranged at least partly inside the reservoir 20 to inject gas into the water W and thereby create a foam F containing PFAS at the water surface. The apparatus 10 also comprises a collection container 40 arranged in fluid communication with the top end 22 of the reservoir 20 to collect the foam F. The reservoir 20 comprises a water inlet 24 for supply of PFAS-contaminated water W, and a water outlet 25 arranged at the bottom end 23 for discharging water with reduced PFAS content W_{red}.

The reservoir 20 comprises a top wall 26, a bottom wall 27 and side walls 28. In this example, the reservoir 20 has a cylindrical shape and thus comprises a circumferential side wall 28. The longitudinal extension L of the reservoir 20 is between the top wall 26 and the bottom wall 27 and also defines the height of the reservoir 20. The water inlet 24 is arranged in the side wall 28 of the reservoir 20. In this example, the water inlet 24 is arranged adjacent the top wall 26 of the reservoir 20.

The collection container 40 is connected to the top end 22 of the reservoir 20 via a foam outlet 41 and a collection pipe 42. The collection container 40 typically has a height, which is similar to the height of the reservoir 20 to reduce the length of the collection pipe 42.

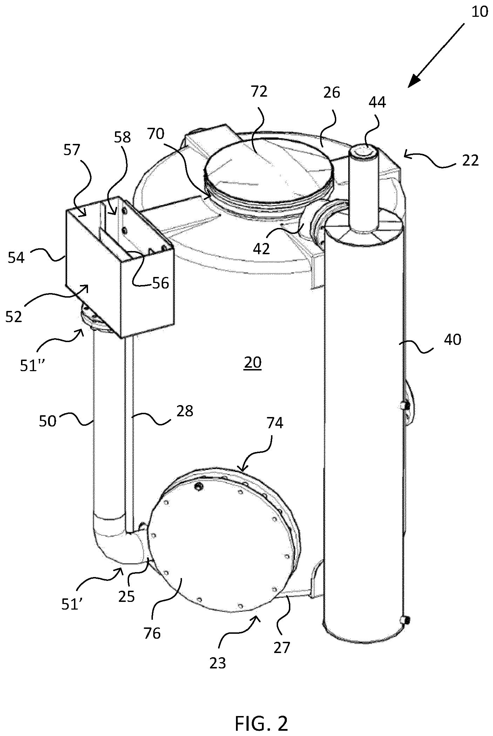

Figure 2 schematically illustrates an apparatus 10 for separating perfluoroalkyl and polyfluoroalkyl substances from water according to an example. The apparatus 10 may be configured as disclosed in Figure 1. In this example, the collection container 40 comprises a vent port 44. The collection container 40 may further comprise a filter (not shown) arranged at the vent port 44 to reduce escape of PFAS from the apparatus 10.

Furthermore, the apparatus 10 comprises a tube 50 connected to the water outlet 25, the tube 50 being arranged on the outside of the reservoir 20 and extending in parallel with the longitudinal extension L of the reservoir 20. The apparatus 10 also comprises a weir device 52 connected to the tube 50 to regulate the water level inside the reservoir 20. The tube 50 extends from the bottom end 23 of the reservoir 20 and upwards, towards the top end 22 of the reservoir 20. A first end 51' of the tube 50 is connected to the water outlet 25, and a second end 51" of the tube 50 is connected to the weir device 52. The configuration and arrangement of the tube 50 means that the water level in the tube 50 is similar to the water level in the reservoir 20. The second end 51" of the tube 50, and thus the weir device 52, may be arranged at a height corresponding to the top end 22 of the reservoir 20.

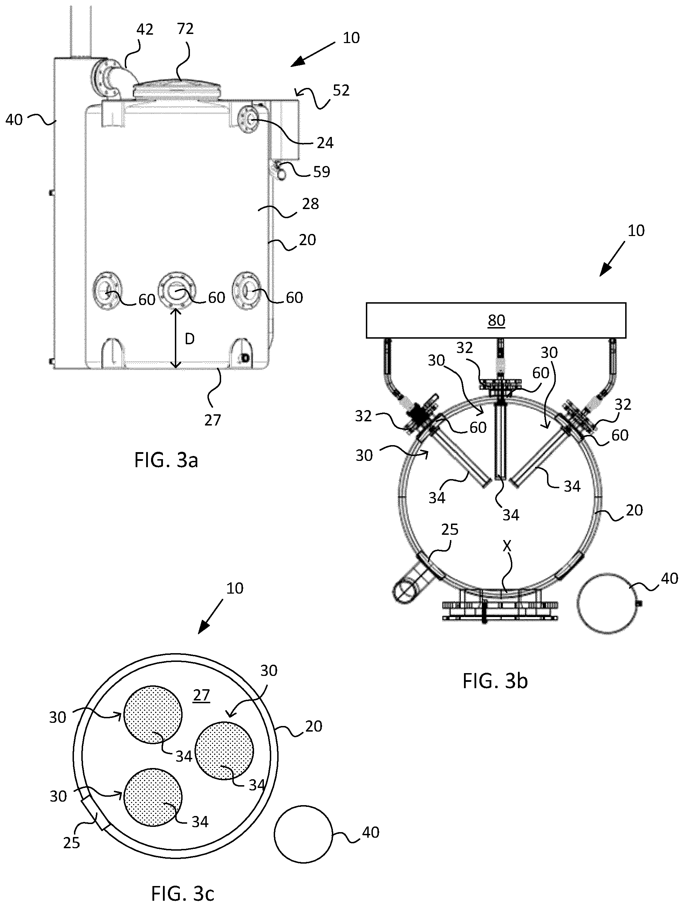

The weir device 52 comprises a weir container 54 arranged in fluid communication with the tube 50, and a weir plate 56 arranged inside the weir container 54. The weir plate 56 may be movably arranged or fixed. The weir plate 56 is arranged to divide the weir container 54 into a first chamber 57 and a second chamber 58. The first chamber 57 may be fluidly connected to the tube 50 and the second chamber 58 may comprise an outlet 59 (see Figure 3a) for discharging the water. Water discharged from the reservoir 20 via the water outlet 25 will flow via the tube 50 into the first chamber 57 and when the water level in the first chamber 57 rises above the weir plate 56, the water will flow into the second chamber 58 and be discharged. The weir plate 56 may be configured to be movable in vertical direction. By changing the vertical position of the weir plate 56, the water level in the first chamber 57 can vary, and the water level in the reservoir 20 can thereby vary as well.

In this example, the reservoir 20 comprises a closable top opening 70 at the top end 22. The top opening 70 is arranged in the top wall 26. The top opening 70 may be used for inspection and thus allow monitoring of the foam creation. The top opening 70 is herein closed by a lid 72, which may be configured to be screwed on the reservoir 20 to close the top opening 70. The reservoir 20 further comprises a closable bottom opening 74 at the bottom end 23 of the reservoir 20. The bottom opening 74 may be arranged in the side wall 28 of the reservoir 20. The bottom opening 74 may be used for removal of deposits and cleaning of the reservoir 20. The bottom opening 74 is herein closed by a cover 76 removably attached to the reservoir 20.

Figure 3a-c schematically illustrate details of an apparatus for separating perfluoroalkyl and polyfluoroalkyl substances from water according to two examples. The apparatus 10 may be configured as disclosed in Figure 1 or Figure 2.

Figure 3a and 3b show an example where the apparatus 10 comprises three gas injection devices 30 inserted through apertures 60 in the side wall 28 of the reservoir 20. In this example, the gas injection devices 30 are removably attached to the outside of the reservoir 20. The gas injection devices 30 extend radially inside the reservoir 20 essentially to the centre of the reservoir 20.

As illustrated in Figure 3b, the gas injection devices 30 each comprises an elongated injection part 34 and an attachment part 32 comprising a flange portion. The elongated injection part 34 may comprise a plurality of openings for injecting the gas into the reservoir 20. The attachment part 32 of each gas injection device 30 is attached to the outside of the side wall 28 of the reservoir 20. The attachment part 23 may have a larger diameter than the injection part 34. The attachment part 32 may further have a larger diameter than the aperture 60 in the reservoir 20. Figure 3b further illustrates that the apparatus 10 comprises a gas supplying unit 80 connected to the gas injection devices 30. The gas supplying unit 80 may be configured to provide a gas pressure within the range of 0,2-0,4 bar. Suitably, the gas supplying unit 80 is controllable so that the provided gas pressure can be regulated. The gas supplying unit 80 may comprise a fan.

Figure 3a shows the gas injection devices 30 arranged at a distance D, in the longitudinal extension L, from the bottom wall 27 of the reservoir 20. This way, there will be room for deposits below the gas injection devices 30 and the risk for deposits clogging the gas injection devices 30 is reduced. The distance D between the gas injection devices 30 and the bottom wall 27 may correspond to 25-50% of the height (longitudinal extension L) of the reservoir 20.

The gas to be injected can be air or any other suitable gas, such as nitrogen or oxygen or any mixture thereof.

Figure 3c shows an example where the apparatus 10 comprises three gas injection devices 30 arranged in the bottom wall 27 of the reservoir 20. This way, as much as possible of the water W in the reservoir 20 will be injected with gas and thereby be purified. The attachment part 32 of the gas injection devices 30 are underneath the injection part 34 and therefore not visible in this figure.

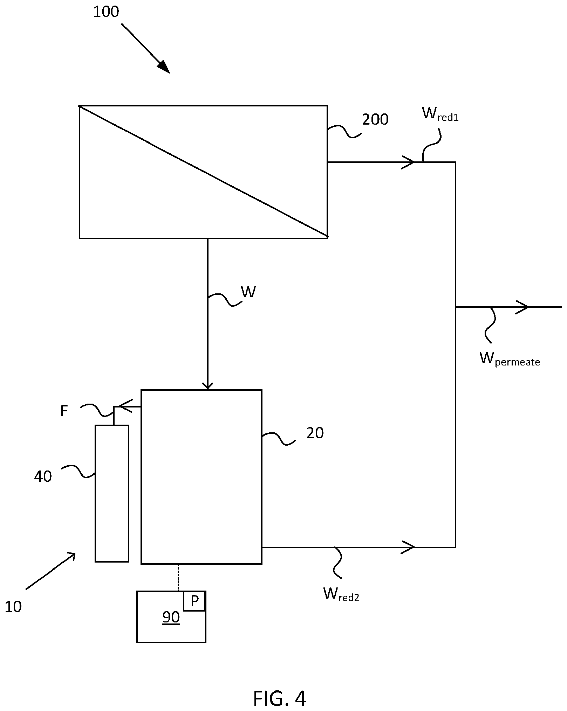

Figure 4 schematically illustrates a system 100 for reducing content of perfluoroalkyl and polyfluoroalkyl substances (PFAS) in PFAS-contaminated water W according to an example. The system 100 comprises a water purification device 200 configured to generate a first water stream W_{red1} having a reduced content of PFAS and a second water stream W having an increased content of PFAS. The system 100 further comprises an apparatus 10 as disclosed in Figure 1, 2, or 3a-c. The apparatus 10 is arranged to receive said second water stream W. The second water stream W provided by the water purification device 200 thus corresponds to the PFAS-contaminated water W as discussed with regard to the apparatus 10.

The water purification device 200 may be a filtration device. Such filtration device 200 may be a membrane filtration device, such as an ultrafiltration or nanofiltration device. The filtration device 200 may be configured to filtrate water containing PFAS and will generate purified water and a concentrate containing PFAS. The first water stream W_{red1} having a reduced content of PFAS may thus be referred to as purified water and the second water stream W having an increased content of PFAS may be referred to as a concentrate. The filtration device 200 may be configured to remove particles, suspended material and high levels of iron and manganese from the water, as well as PFAS. The concentrate W may subsequently be lead to the apparatus 10 for further enrichment.

The apparatus 10 is thus arranged to receive the concentrate W from the water purification device 200, and to separate perfluoroalkyl and polyfluoroalkyl substances from the concentrate W by injection of gas into the concentrate W, whereby a foam F containing PFAS will be created. The apparatus 10 is configured to collect the foam F containing PFAS in the collection container 40 of the apparatus 10 and to discharge water with reduced PFAS content W_{red2}.

The system 100 may further be configured to combine the water with reduced PFAS content W_{red2} with the first water stream W_{red1} having a reduced content of PFAS obtained from the water purification device 200, to obtain a water Wₚₑᵣₘₑₐₜₑ that is not as pure from PFAS as the initial first water stream W_{red1}, but still has a PFAS content that is acceptable when returning the water to the environment.

Even though only one water purification device 200 is shown in the figure, the system 100 may comprise a plurality of water purification devices 200 arranged upstream of the apparatus 10. Thus, water containing PFAS may be purified in several steps.

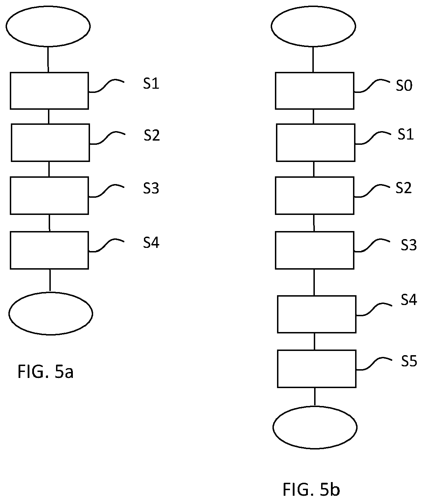

The figure illustrates that the apparatus 10 and/or system 100 comprises a control device 90 configured to control the water flow supplied via the water inlet 24 into the reservoir 20 and/or the gas flow injected by means of the gas injection device 30. The control device 90 may be configured to control the gas supplying unit 200 and thereby control the gas flow injected by means of the gas injection device 30. Particularly, the control device 90 may be configured to control the gas pressure provided by the gas supplying unit 200. The control device 90 may be configured to control a valve arrangement at the water inlet 24 to control the water flow through the water inlet 24. The control device 90 may be configured to control the gas flow injected by means of the gas injection device 30, based on the water flow into the reservoir 30. The control device 90 may be implemented as a separate entity or distributed in two or more physical entities. The control device 90 may comprise one or more control units and/or computers. The control device 90 may comprise a computer program P comprising instructions which, when the program P is executed by the control device 90, cause the control device 90 to carry out the method as disclosed in Figure 5a-b.

Figure 5a discloses a flow chart describing a method comprising the steps
S1: Feeding PFAS-contaminated water into the reservoir of an apparatus according to the invention, and as illustrated in Figures 1-3, through the water inlet to achieve a water level above the gas injection device;
S2: Injecting gas through said gas injection device to thereby create a foam containing PFAS at the water surface and allowing said foam to exit the reservoir to the collection container;
S3: Collecting the PFAS-containing foam in the collection container;
S4: Removing water with reduced PFAS-content from the reservoir through the water outlet.

Figure 6 discloses a flow chart describing a further method comprising the steps:
50) Subjecting PFAS-contaminated water to a purification step to obtain a first water stream having a reduced content of PFAS and a second water stream having an increased content of PFAS;
S1) Feeding the water stream having an increased content of PFAS into the reservoir of an apparatus according to the invention, and as illustrated in Figures 1-3, to achieve a water level above the gas injection device(s);
S2) Injecting gas through said gas injection device to thereby create a foam containing PFAS at the water surface and allowing said foam to exit the reservoir to the collection container;
S3) Collecting the PFAS-containing foam in the collection container;
S4) removing water with reduced PFAS-content from the reservoir through the water outlet.; and
S5) Combining the first water stream and the water obtained in step S4.

### EXAMPLES

The present examples are included to further illustrate the invention and shall not be considered as limiting the scope of the invention, which is that of the appended claims.

### EXAMPLE 1

An apparatus as diclosed in Figure 2 was connected to the concentrate stream of a membrane filtration device (Björks Rostfria AB, Hallstavik, Sweden). The reservoir was generally cylinder shaped with a height of ~2 m and a diameter of ~1.5 m, i.e. a volume of ~3.5 m³. PFAS-contaminated water was continuously introduced at a flow rate of ~1 m³/h. Air was injected through the gas injection devices for 30 minutes, followed by a quiet period of 30 minutes. The results are disclosed in Table 1.

**Table 1**

| **Sample** | **PFAS-11 content (ng/L)** |
|---|---|
| Incoming water | 100 |
| Concentrate | 860 |
| Foam | 1.47*10⁶ |
| Treated concentrate | 82 |
| Combined permeate+treated concentrate | 16.4 |

The system processed on average 72 m³ water per day, producing 61.2 m³ permeate and 10.8 m³ concentrate, which was subjected to treatment according to the invention. 10.79 m³ treated concentrate could be combined with the permeate and returned to the environment with a PFAS content well below the current Swedish threshold for PFAS content in environmental water (90 ng/L). The volume of liquid obtained as PFAS-enriched foam amounted to about 7-10 litres per day. The volume of contaminated water sent for destruction was thus reduced by a factor 10³, from ~11 m³ to ~7-10 L, significantly reducing destruction costs including need for transportation.

### REFERENCES

Alzahrani, S., & Mohammad, A. W. (2014). Challenges and trends in membrane technology implementation for produced water treatment: A review. Journal of Water Process Engineering, 107-133.

Banzhaf, S., Filipovic, M., Lewis, J., Sparrenbom, C. J., & Barthel, R. (2017). A review of contamination of surface-, ground-, and drinking water in Sweden by perfluoroalkyl and polyfluoroalkyl substances (PFASs). Ambio, 335-346.

Ross Ian ET AL: "A review of emerging technologies for remediation of PFASs", REMEDIATION, vol. 28, no. 2, 1 March 2018, pages 101-126.

## Claims

1. A method for reducing content of perfluoroalkyl and polyfluoroalkyl substances (PFAS) in PFAS-contaminated water from the environment, comprising the steps
S0) Subjecting PFAS-contaminated water collected from the environment to a purification step to obtain a first water stream (Wred1) having a reduced content of PFAS and a second water stream (W) having an increased content of PFAS;
S1) Feeding the water stream (W) having an increased content of PFAS into an apparatus (10) for reducing content of perfluoroalkyl and polyfluoroalkyl substances (PFAS) in PFAS-contaminated water, the apparatus (10) comprising: a reservoir (20) for accommodating PFAS-contaminated water (W), the reservoir (20) having a longitudinal extension (L) between a top end (22) and a bottom end (23); at least one gas injection device (30) arranged at least partly inside the reservoir (20) to inject gas into the water (W) and thereby create a foam (F) containing PFAS at the water surface; and a collection container (40) arranged in fluid communication with the top end (22) of the reservoir (20) to collect the foam (F); wherein the reservoir (20) comprises a water inlet (24) for supply of PFAS-contaminated water (W), and a water outlet (25) arranged at the bottom end (23) for discharging water with reduced PFAS content (W_{red2}), said feeding being such as to achieve a water level above the gas injection device(s);
S2) Injecting gas through said gas injection device to thereby create the foam containing PFAS at the water surface and allowing said foam to exit the reservoir to the collection container;
S3) Collecting the PFAS-containing foam in the collection container;
S4) Removing water (Wred2) with reduced PFAS-content from the reservoir through the water outlet;
S5) Combining the first water stream (Wred1) and the water (Wred2) obtained in step S4); and
S6) Releasing the combined water streams obtained in step S5) to the environment.

2. The method according to claim 1, wherein the purification is a membrane filtration, such as ultrafiltration and/or nanofiltration.

3. The method according to any one of claims 1 and 2, wherein water with reduced PFAS-content (W_{red2}) is continuously removed from said reservoir through a tube (50) connected to the water outlet (25), the tube (50) being arranged on the outside of the reservoir (20) and extending in parallel with the longitudinal extension (L) of the reservoir (20), wherein a weir device (52) is connected to the tube (50) to regulate the water level inside the reservoir (20).

4. The method according to claim 3, wherein PFAS-contaminated water (W) is continuously fed into the reservoir (20) at a flow rate adapted to achieve a retention time for water in the reservoir of 2-4 hours, such as at a flow rate of 0.25-2.5 m³ per hour.

5. The method according to any one of claims 1-4, where gas injection in step S2 is performed for a first period of time followed by a second period of time when no gas is injected.

6. A system (100) for reducing content of perfluoroalkyl and polyfluoroalkyl substances (PFAS) in PFAS-contaminated water from the environment, the system comprising:
a water purification device (200) configured to receive PFAS-contaminated water collected from the environment and generate a first water stream (Wred1) having a reduced content of PFAS and a second water stream (W) having an increased content of PFAS; and,
an apparatus (10) for reducing content of perfluoroalkyl and polyfluoroalkyl substances (PFAS) in the second water stream (W) having an increased content of PFAS, the apparatus (10) comprising:
a reservoir (20) for accommodating PFAS-contaminated water (W), the reservoir (20) having a longitudinal extension (L) between a top end (22) and a bottom end (23);
at least one gas injection device (30) arranged at least partly inside the reservoir (20) to inject gas into the water (W) and thereby create a foam (F) containing PFAS at the water surface; and
a collection container (40) arranged in fluid communication with the top end (22) of the reservoir (20) to collect the foam (F);
wherein the reservoir (20) comprises a water inlet (24) for supply of PFAS-contaminated water (W), and a water outlet (25) arranged at the bottom end (23) for discharging water with reduced PFAS content (Wred2);
said apparatus (10) being arranged to receive said second water stream (W),
wherein said system (100) is configured to combine said first water stream (Wred1) and said water with reduced PFAS content (Wred2) discharged from the water outlet (25), for release to the environment.

7. The system (100) according to claim 6, wherein the water purification device (200) is a membrane filtration device.

8. The system (100) according to claim 6 or 7, wherein the apparatus further comprises:
a tube (50) connected to the water outlet (25), the tube (50) being arranged on the outside of the reservoir (20) and extending in parallel with the longitudinal extension (L) of the reservoir (20); and
a weir device (52) connected to the tube (50) to regulate the water level inside the reservoir (20).

9. The system (100) according to any one of claims 6-8, wherein the water inlet (24) of the apparatus (10) is arranged at the top end (22) of the reservoir (20).

10. The system (100) according to any one of claims 6-9, wherein the water outlet (25) of the apparatus (10) is arranged below the at least one gas injection device (30).

11. The system (100) according to any one of claims 6-10, wherein the apparatus (10) further comprises:
a control device (90) configured to control the water flow supplied via the water inlet (24), the water flow through the water outlet (25), and/or the gas flow injected by means of the at least one gas injection device (30)

## Patentansprüche

1. Verfahren zum Verringern des Gehalts an Perfluoralkyl- und Polyfluoralkylsubstanzen (PFAS) in mit PFAS verunreinigtem Wasser aus der Umwelt, umfassend die folgenden Schritte:
S0) Unterziehen mit PFAS verunreinigten Wassers, das aus der Umwelt angesammelt wird, einem Säuberungsschritt, um einen ersten Wasserstrom (Wred1), der einen verringerten Gehalt an PFAS aufweist, und einen zweiten Wasserstrom (W), der einen erhöhten Gehalt an PFAS aufweist, zu erlangen;
S1) Einspeisen des Wasserstroms (W), der einen erhöhten Gehalt an PFAS aufweist, in eine Vorrichtung (10) zum Verringern des Gehalts an Perfluoralkyl- und Polyfluoralkylsubstanzen (PFAS) in mit PFAS verunreinigtem Wasser, wobei die Vorrichtung (10) Folgendes umfasst: ein Sammelbecken (20) zum Unterbringen von mit PFAS verunreinigtem Wasser (W), wobei das Sammelbecken (20) eine Längserstreckung (L) zwischen einem oberen Ende (22) und einem unteren Ende (23) aufweist; mindestens ein Gaseinspritzgerät (30), das mindestens teilweise innerhalb des Sammelbeckens (20) angeordnet ist, um Gas in das Wasser (W) einzuspritzen und dadurch einen Schaum (F), der PFAS enthält, an der Wasserfläche herzustellen; und einen Sammelbehälter (40), der in Fluidkommunikation mit dem oberen Ende (22) des Sammelbeckens (20) angeordnet ist, um den Schaum (F) anzusammeln; wobei das Sammelbecken (20) einen Wassereinlass (24) zur Zufuhr von mit PFAS verunreinigtem Wasser (W) und einen Wasserauslass (25), der an dem unteren Ende (23) angeordnet ist, zum Abgeben von Wasser mit verringertem PFAS-Gehalt (W_{red2}) umfasst, wobei das Einspeisen derartig ist, dass ein Wasserpegel oberhalb des/der Gaseinspritzgeräts/Gaseinspritzgeräte erzielt wird;
S2) Einspritzen von Gas durch das Gaseinspritzgerät, um dadurch den Schaum, der PFAS enthält, an der Wasserfläche herzustellen und zu ermöglichen, dass der Schaum das Sammelbecken in den Sammelbehälter verlässt;
S3) Ansammeln des PFAS enthaltenden Schaumes in dem Sammelbehälter;
S4) Entfernen von Wasser (Wred2) mit verringertem PFAS-Gehalt aus dem Sammelbecken durch den Wasserauslass;
S5) Kombinieren des ersten Wasserstroms (Wred1) mit dem Wasser (Wred2), das in Schritt S4) erlangt wurde; und
S6) Freigeben der kombinierten Wasserströme, die in Schritt S5) erlangt wurden, in die Umwelt.

2. Verfahren nach Anspruch 1, wobei die Säuberung eine Membranfiltrierung ist, wie etwa Ultrafiltrierung und/oder Nanofiltrierung.

3. Verfahren nach einem der Ansprüche 1 und 2, wobei Wasser mit verringertem PFAS-Gehalt (W_{red2}) kontinuierlich durch ein Rohr (50), das mit dem Wasserauslass (25) verbunden ist, aus dem Sammelbecken entfernt wird, wobei das Rohr (50) auf der Außenseite des Sammelbeckens (20) angeordnet ist und sich parallel zu der Längserstreckung (L) des Sammelbeckens (20) erstreckt, wobei ein Wehrgerät (52) mit dem Rohr (50) verbunden ist, um den Wasserpegel innerhalb des Sammelbeckens (20) zu regeln.

4. Verfahren nach Anspruch 3, wobei mit PFAS verunreinigtes Wasser (W) kontinuierlich in das Sammelbecken (20) mit einer Durchflussrate, die dazu ausgelegt ist, eine Retentionszeit für Wasser in dem Sammelbecken von 2-4 Stunden, wie etwa einer Durchflussrate von 0,25-2,5 m³ pro Stunde, zu erzielen, eingespeist wird.

5. Verfahren nach einem der Ansprüche 1-4, wobei das Gaseinspritzen in Schritt S2 während eines ersten Zeitraums durchgeführt wird, dem ein zweiter Zeitraum folgt, während dessen kein Gas eingespritzt wird.

6. System (100) zum Verringern des Gehalts an Perfluoralkyl- und Polyfluoralkylsubstanzen (PFAS) in mit PFAS verunreinigtem Wasser aus der Umwelt, wobei das System Folgendes umfasst:
ein Wassersäuberungsgerät (200), das dazu konfiguriert ist, mit PFAS verunreinigtes Wasser, das aus der Umwelt angesammelt wird, aufzunehmen und einen ersten Wasserstrom (Wred1), der einen verringerten Gehalt an PFAS aufweist, und einen zweiten Wasserstrom (W), der einen erhöhten Gehalt an PFAS aufweist, zu erzeugen; und
eine Vorrichtung (10) zum Verringern des Gehalts an Perfluoralkyl- und Polyfluoralkylsubstanzen (PFAS) in dem zweiten Wasserstrom (W), der einen erhöhten Gehalt an PFAS aufweist, wobei die Vorrichtung (10) Folgendes umfasst:
ein Sammelbecken (20) zum Unterbringen von mit PFAS verunreinigtem Wasser (W), wobei das Sammelbecken (20) eine Längserstreckung (L) zwischen einem oberen Ende (22) und einem unteren Ende (23) aufweist;
mindestens ein Gaseinspritzgerät (30), das mindestens teilweise innerhalb des Sammelbeckens (20) angeordnet ist, um Gas in das Wasser (W) einzuspritzen und dadurch einen Schaum (F), der PFAS enthält, an der Wasserfläche herzustellen; und
einen Sammelbehälter (40), der in Fluidkommunikation mit dem oberen Ende (22) des Sammelbeckens (20) angeordnet ist, um den Schaum (F) anzusammeln;
wobei das Sammelbecken (20) einen Wassereinlass (24) zur Zufuhr von mit PFAS verunreinigtem Wasser (W) und einen Wasserauslass (25), der an dem unteren Ende (23) angeordnet ist, um Wasser mit verringertem PFAS-Gehalt (Wred2) abzugeben, umfasst;
wobei die Vorrichtung (10) dazu angeordnet ist, den zweiten Wasserstrom (W) aufzunehmen,
wobei das System (100) dazu konfiguriert ist, den ersten Wasserstrom (Wred1) und das Wasser mit verringertem PFAS-Gehalt (Wred2), das aus dem Wasserauslass (25) abgegeben wird, zur Freigabe in die Umwelt zu kombinieren.

7. System (100) nach Anspruch 6, wobei das Wassersäuberungsgerät (200) ein Membranfiltrierungsgerät ist.

8. System (100) nach Anspruch 6 oder 7, wobei die Vorrichtung ferner Folgendes umfasst:
ein Rohr (50), das mit dem Wasserauslass (25) verbunden ist, wobei das Rohr (50) auf der Außenseite des Sammelbeckens (20) angeordnet ist und sich parallel zu der Längserstreckung (L) des Sammelbeckens (20) erstreckt; und
ein Wehrgerät (52), das mit dem Rohr (50) verbunden ist, um den Wasserpegel innerhalb des Sammelbeckens (20) zu regeln.

9. System (100) nach einem der Ansprüche 6-8, wobei der Wassereinlass (24) der Vorrichtung (10) an dem oberen Ende (22) des Sammelbeckens (20) angeordnet ist.

10. System (100) nach einem der Ansprüche 6-9, wobei der Wasserauslass (25) der Vorrichtung (10) unterhalb des mindestens einen Gaseinspritzgeräts (30) angeordnet ist.

11. System (100) nach einem der Ansprüche 6-10, wobei die Vorrichtung (10) ferner Folgendes umfasst:
ein Steuergerät (90), das dazu konfiguriert ist, den Wasserdurchfluss, der über den Wassereinlass (24) zugeführt wird, den Wasserdurchfluss durch den Wasserauslass (25) und/oder den Gasdurchfluss, der mittels des mindestens einen Gaseinspritzgeräts (30) eingespritzt wird, zu steuern.

## Revendications

1. Procédé pour réduire la teneur en substances perfluoroalkyles et polyfluoroalkyles (PFAS) dans de l'eau contaminée par des PFAS provenant de l'environnement, comprenant les étapes
50) de soumission de l'eau contaminée par des PFAS collectée dans l'environnement à une étape de purification pour obtenir un premier flux d'eau (Wred1) ayant une teneur réduite en PFAS et un second flux d'eau (W) ayant une teneur accrue en PFAS ;
51) d'introduction du flux d'eau (W) ayant une teneur accrue en PFAS dans un appareil (10) pour réduire la teneur en substances perfluoroalkyles et polyfluoroalkyles (PFAS) dans de l'eau contaminée par des PFAS, l'appareil (10) comprenant : un réservoir (20) pour recevoir de l'eau (W) contaminée par des PFAS, le réservoir (20) ayant une extension longitudinale (L) entre une extrémité supérieure (22) et une extrémité inférieure (23) ; au moins un dispositif d'injection de gaz (30) disposé au moins en partie à l'intérieur du réservoir (20) pour injecter du gaz dans l'eau (W) et créer ainsi une mousse (F) contenant des PFAS à la surface de l'eau ; et un récipient de collecte (40) disposé en communication fluidique avec l'extrémité supérieure (22) du réservoir (20) pour collecter la mousse (F) ; dans lequel le réservoir (20) comprend une entrée d'eau (24) pour l'alimentation en eau (W) contaminée par des PFAS, et une sortie d'eau (25) disposée à l'extrémité inférieure (23) pour évacuer l'eau à teneur réduite en PFAS (W_{red2}), ladite alimentation étant telle qu'elle permet d'atteindre un niveau d'eau au-dessus du ou des dispositifs d'injection de gaz ;
S2) d'injection de gaz à travers ledit dispositif d'injection de gaz pour créer ainsi la mousse contenant des PFAS à la surface de l'eau et de permettre à ladite mousse de sortir du réservoir vers le récipient de collecte ;
S3) de collecte de la mousse contenant des PFAS dans le récipient de collecte ;
S4) de retrait de l'eau (Wred2) à teneur réduite en PFAS du réservoir par la sortie d'eau ;
S5) de combinaison du premier flux d'eau (Wred1) et de l'eau (Wred2) obtenue à l'étape S4) ; et
S6) de rejet des flux d'eau combinés obtenus à l'étape S5) dans l'environnement.

2. Procédé selon la revendication 1, dans lequel la purification est une filtration sur membrane, telle qu'une ultrafiltration et/ou une nanofiltration.

3. Procédé selon l'une quelconque des revendications 1 et 2, dans lequel l'eau à teneur réduite en PFAS (Wred2) est retirée en continu dudit réservoir à travers un tube (50) relié à la sortie d'eau (25), le tube (50) étant disposé à l'extérieur du réservoir (20) et s'étendant parallèlement à l'extension longitudinale (L) du réservoir (20), dans lequel un dispositif de déversoir (52) est relié au tube (50) pour réguler le niveau d'eau à l'intérieur du réservoir (20).

4. Procédé selon la revendication 3, dans lequel de l'eau (W) contaminée par des PFAS est introduite en continu dans le réservoir (20) à un débit adapté pour atteindre un temps de rétention d'eau dans le réservoir de 2 à 4 heures, par exemple à un débit de 0,25 à 2,5 m³ par heure.

5. Procédé selon l'une quelconque des revendications 1 à 4, dans lequel l'injection de gaz à l'étape S2 est effectuée pendant une première période de temps suivie d'une seconde période de temps pendant laquelle aucun gaz n'est injecté.

6. Système (100) pour réduire la teneur en substances perfluoroalkyles et polyfluoroalkyles (PFAS) dans de l'eau contaminée par des PFAS provenant de l'environnement, le système comprenant :
un dispositif de purification d'eau (200) configuré pour recevoir de l'eau contaminée par des PFAS collectée dans l'environnement et générer un premier flux d'eau (Wred1) ayant une teneur réduite en PFAS et un second flux d'eau (W) ayant une teneur accrue en PFAS ; et,
un appareil (10) pour réduire la teneur en substances perfluoroalkyles et polyfluoroalkyles (PFAS) dans le second flux d'eau (W) ayant une teneur accrue en PFAS, l'appareil (10) comprenant :
un réservoir (20) pour recevoir de l'eau contaminée par des PFAS (W), le réservoir (20) ayant une extension longitudinale (L) entre une extrémité supérieure (22) et une extrémité inférieure (23) ;
au moins un dispositif d'injection de gaz (30) disposé au moins en partie à l'intérieur du réservoir (20) pour injecter du gaz dans l'eau (W) et créer ainsi une mousse (F) contenant des PFAS à la surface de l'eau ; et
un récipient de collecte (40) disposé en communication fluidique avec l'extrémité supérieure (22) du réservoir (20) pour collecter la mousse (F) ;
dans lequel le réservoir (20) comprend une entrée d'eau (24) pour l'alimentation en eau contaminée par des PFAS (W), et une sortie d'eau (25) disposée au niveau de l'extrémité inférieure (23) pour évacuer l'eau à teneur réduite en PFAS (Wred2) ;
ledit appareil (10) étant disposé pour recevoir ledit second flux d'eau (W), dans lequel ledit système (100) est configuré pour combiner ledit premier flux d'eau (Wred1) et ladite eau à teneur réduite en PFAS (Wred2) évacuée de la sortie d'eau (25), pour rejet dans l'environnement.

7. Système (100) selon la revendication 6, dans lequel le dispositif de purification d'eau (200) est un dispositif de filtration à membrane.

8. Système (100) selon la revendication 6 ou 7, dans lequel l'appareil comprend en outre :
un tube (50) relié à la sortie d'eau (25), le tube (50) étant disposé à l'extérieur du réservoir (20) et s'étendant parallèlement à l'extension longitudinale (L) du réservoir (20) ; et
un dispositif de déversoir (52) relié au tube (50) pour réguler le niveau d'eau à l'intérieur du réservoir (20).

9. Système (100) selon l'une quelconque des revendications 6 à 8, dans lequel l'entrée d'eau (24) de l'appareil (10) est disposée à l'extrémité supérieure (22) du réservoir (20).

10. Système (100) selon l'une quelconque des revendications 6 à 9, dans lequel la sortie d'eau (25) de l'appareil (10) est disposée en dessous de l'au moins un dispositif d'injection de gaz (30).

11. Système (100) selon l'une quelconque des revendications 6 à 10, dans lequel l'appareil (10) comprend en outre :
un dispositif de commande (90) configuré pour commander le flux d'eau fourni par l'intermédiaire de l'entrée d'eau (24), le débit d'eau à travers la sortie d'eau (25), et/ou le débit de gaz injecté au moyen de l'au moins un dispositif d'injection de gaz (30).
